# EUROPEAN PATENT SPECIFICATION

(11) **EP 2 786 481 B1**
(45) Date of publication and mention of the grant of the patent: **14.02.2018**
(21) Application number: 11876820.9
(22) Date of filing: 01.12.2011
(51) Int. Cl.: H02K 1/34, H02P 9/40, H02K 53/00, H02K 7/18

(54) **MAGNETIC POWER GENERATION**
MAGNETISCHE STROMERZEUGUNG
GÉNÉRATION DE PUISSANCE MAGNÉTIQUE

(43) Date of publication of application: 08.10.2014
(73) Proprietor: Kolcheh, Yaacov, 81584 Yavne (IL)
(72) Inventor: Kolcheh, Yaacov, 81584 Yavne (IL)
(74) Representative: Dennemeyer & Associates S.A.
(86) International application number: PCT/IL2011/000918
(87) International publication number: WO 2013/080194

(56) References cited:
- CN-A- 86 102 846
- GB-A- 2 248 525
- US-A- 2 109 953
- US-A- 3 636 391
- US-A- 3 879 622
- US-A1- 2005 252 086
- US-A1- 2008 111 432
- US-A1- 2010 148 517

## Description

### FIELD OF THE INVENTION

The present invention relates generally to power generation, and specifically to the use of permanent magnets in generating mechanical or electrical power.

### BACKGROUND AND SUMMARY OF THE INVENTION

Permanent magnets are widely used in electric power generators, typically based on electromagnetic induction. Operation of these generators requires that shaft motion be provided by an external power source, such as an internal combustion engine or turbine.

In contrast to these prior art devices, an embodiment of the present invention provides a machine that converts magnetic force into motion. The machine comprises a central magnet, which is configured to traverse a path between two side magnets and is connected by a linkage to rotate a shaft. The side magnets are oriented to repel the central magnet. Thus, a magnetic force between the central magnet and the side magnets causes the central magnet to oscillate between the ends of the path, thereby rotating the shaft. Shutter assemblies are disposed between the side magnets and the respective ends of the path. Each shutter assembly comprises at least one ferromagnetic shutter and a mechanism, which opens the ferromagnetic shutter as the central magnet approaches the shutter assembly, thereby modulating the magnetic force synchronously with oscillation of the central magnet.

The document CN86102846 A (Abstract) discloses an engine which can be used as an original driver and which makes magnetic potential changes through pushing and pulling an insulating flat in two magnetic fields of same polarity on the principle that the same polarity magnetic forces repel and opposite polarity magnetic forces attract each other. The engine can be used as an original driver.

It is against the background, and the limitations and problems associated therewith, that the present invention has been developed.

The present invention relates to a number of improvements in power generating machines in general, which improvements are particularly useful to convert magnetic force into motion, and which produce a number of advantages when implemented in generating mechanical or electrical power as will be more particularly described below.

To achieve this, the magnetically operated power generating machine of the invention comprises the features claimed in claim 1, and the invention provides a method of power generation using magnetic force according to claim 6.

Advantageous embodiments of the invention are claimed in the dependent claims.

### BRIEF DESCRIPTION OF THE DRAWINGS

The present invention will be more fully understood from the following detailed description of the embodiments thereof, taken together with the drawings in which:
Fig. 1A is a schematic, pictorial illustration of a machine for magnetic power generation, in accordance with an embodiment of the present invention;
Figs. 1B and 1C are schematic frontal and top views, respectively, of the machine of Fig. 1A;
Figs. 2A and 2B are schematic, pictorial illustrations showing motion of a central magnet between first and second ends of a motion path in the machine of Fig. 1A, in accordance with an embodiment of the present invention;
Figs. 3A and 3B are schematic frontal views of the machine of Fig. 1A showing the motion of the central magnet between the first and second ends of the motion path;
Figs. 4A and 4B are schematic top views of the machine of Fig. 1A showing the motion of the central magnet between the first and second ends of the motion path; and
Fig. 5 is a schematic frontal view of a machine for magnetic power generation, in accordance with another embodiment of the present invention.

### DETAILED DESCRIPTION OF EMBODIMENTS

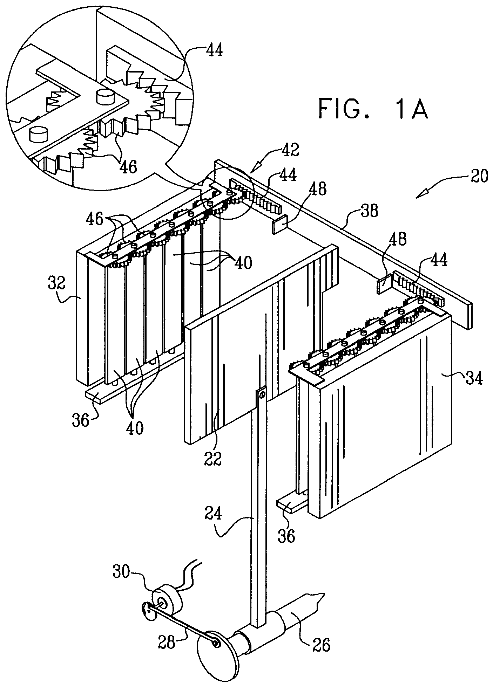

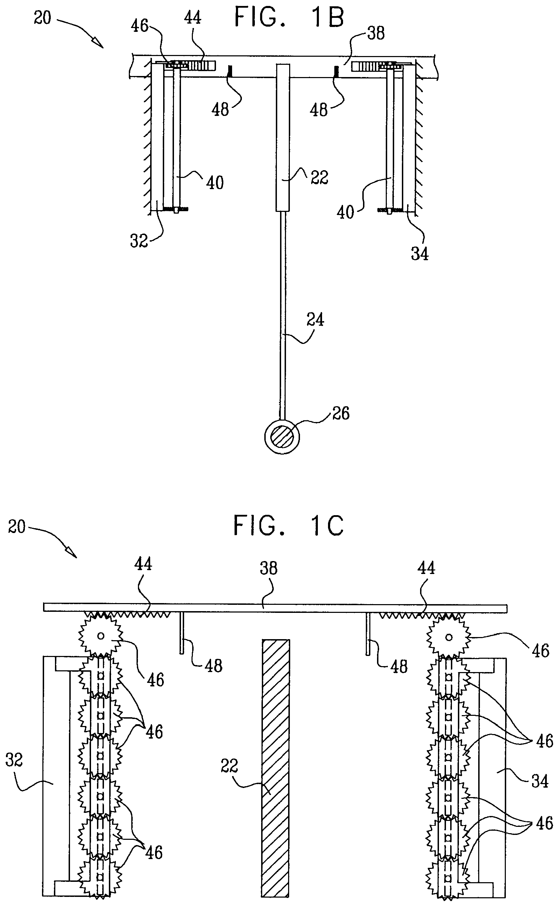

Reference is now made to Figs. 1A, 1B and 1C, which schematically illustrate a machine for magnetic power generation, in accordance with an embodiment of the present invention. Fig. 1A is a pictorial view of the machine, while Figs. 1B and 1C show frontal and top views, respectively.

Machine 20 comprises a central magnet 22, which is connected by a linkage 24 to a shaft 26. The central magnet is mounted so as to be able to traverse a path whose ends are bounded by stops 48. As the central magnet traverses this path, it turns shaft 26 alternately clockwise and counterclockwise. In this embodiment, shaft 26 is connected by a transmission 28 to turn an electric power generator 30, thereby generating an electrical current. Alternatively, shaft 26 may be coupled to mechanisms of other sorts for generating electrical power or performing other mechanical work, as will be apparent to those skilled in the art.

Side magnets 32 and 34 are disposed adjacent to opposite ends of the path of central magnet 22. The side magnets are oriented so as to repel the central magnet. Although magnets 22, 32 and 34 are shown in the figures, by way of example, as having planar shapes, the magnets may alternatively be made in any shape suitable for the purposes described herein. Brackets and connectors that may be used to hold and guide the magnets are omitted from the figures for the sake of simplicity.

Shutter assemblies 36 are respectively disposed between side magnets 32 and 34 the adjacent ends of the path of central magnet 22. Each shutter assembly comprises a row of ferromagnetic shutters 40, which are configured to open and close under the control of a shutter mechanism 42. In the present embodiment, this mechanism comprises a rack 44, mounted on a frame 38, together with a set of pinion gears 46. Each shutter 40 is attached to a respective gear 46, so that the shutters open and close as the respective gears turn, as described hereinbelow. Alternatively, other sorts of mechanisms can be used to open and close the shutters, as will be apparent to those skilled in the art. When shutters 40 are closed, they serve to shield central magnet 22 from the direct magnetic fields of side magnets 32 and 34. For this purpose, the shutters may comprise, for example, solid sheets of suitable steel or other ferromagnetic material, or alternatively laminates or other combinations of ferromagnetic and other materials.

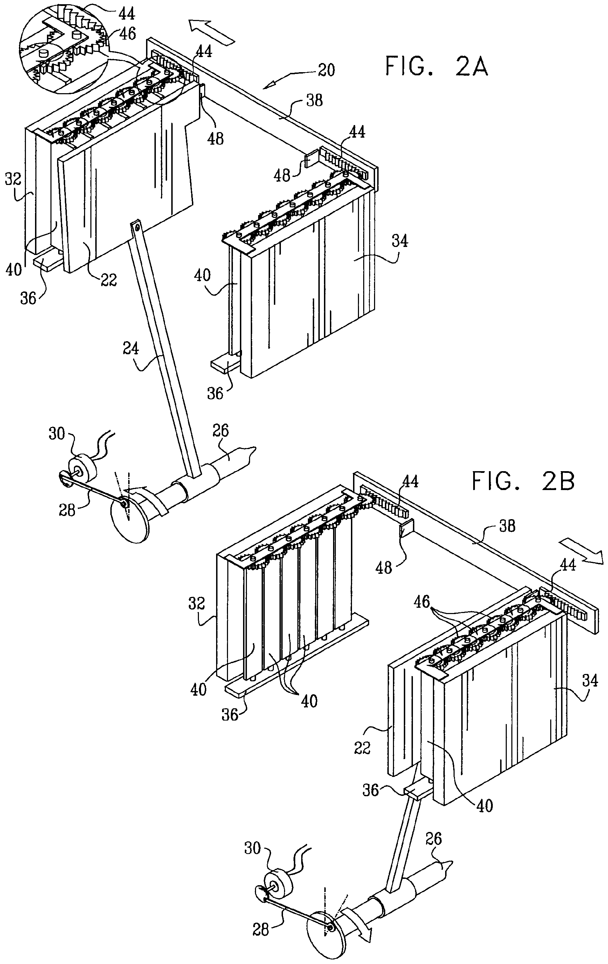

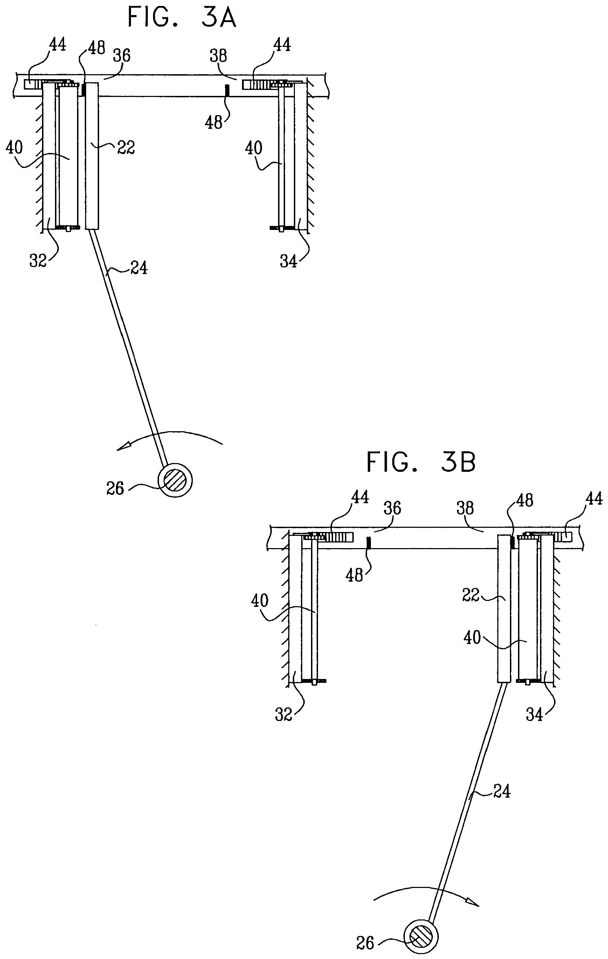

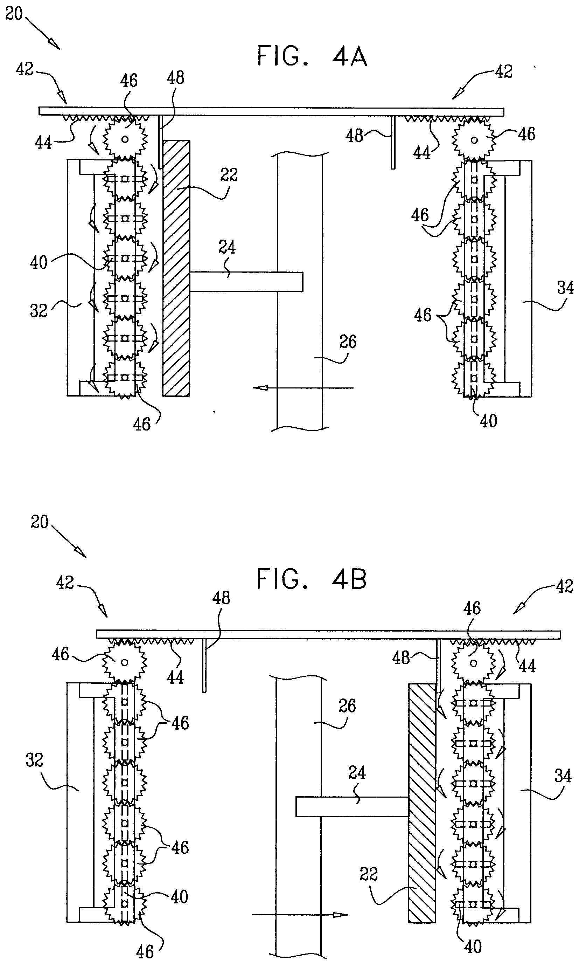

Reference is now made to Figs. 2A, 2B, 3A, 3B, 4A and 4B, which schematically illustrate motion of central magnet 22 between the ends of its motion path in machine 20, in pictorial, frontal, and top views, respectively in accordance with an embodiment of the present invention. In these figures, central magnet 22 is assumed to be connected to linkage 24 by a suitable hinged mounting (not shown in the figures) so that the central magnet remains parallel to the planes of side magnets 32 and 34. Alternatively, the central magnet may be mounted in a fixed orientation relative to linkage 24. In this latter case, the side magnets may optionally be inclined so that they are roughly parallel to the planes of the central magnet at the respective ends of the path.

To initiate operation of machine 20, central magnet 22 is moved to one end of its path, such as the left end, as shown in Figs. 2A, 3A and 4A. Moving the central magnet 22 to the left causes shutters 40 mounted on shutter assembly support 36 that is adjacent to side magnet 32 to move to the right toward the central magnet 22. This movement may be engendered begins, when shutters 40 are closed, by magnetic attraction between the central magnet 22 and the ferromagnetic material in of shutters 40, and during this motion of central magnet 22 to the left, it comes into contact with stop 48, preventing further movement of central magnet 22 to the left. At this point, shutters 40 mounted on shutter assembly support 36 begin to open to the right. Alternatively or additionally, other means (not shown in the figures) may be provided to cause the shutters 40 mounted on shutter assembly support 36 to move toward the central magnet 22. For example, there may be additional magnets on the shutter assembly support 36 that are oriented so as to attract the central magnet 22, or there may be a mechanical linkage between the central magnet 22 and the shutter assembly support 36. Side magnet 32 may be mounted to move toward the central magnet 22 together with its respective shutter assembly support 36, as shown in the figures, or the side magnet 32 may alternatively remain fixed in place while the shutter assembly support 36 moves away from it toward the central magnet 22.

In any case, as stated above, when central magnet 22 is moved to the left end of its path and contacts stop 48, the movement of shutters 40 mounted on shutter assembly support 36 toward central magnet 22 causes pinion gear 46 in shutter mechanism 42 to rotate on rack 44, thereby turning shutters 40 to open to the right. When the shutters 40 are open, their previous magnetic shielding effect is diminished. The repulsive force exerted by side magnet 32 now causes central magnet 22 to reverse direction and move away toward the opposite end of its path. The repulsive force (or other linkage) similarly causes shutters 40 mounted on shutter assembly support 36 to move back, away from the central magnet 22, whereby mechanism 42 closes the shutters 40 to the left.

Central magnet 22 now moves toward the right end of its path, as shown in Figs. 2B, 3B and 4B. As the central magnet 22 approaches side magnet 34, the shutters 40 mounted on the adjacent shutter assembly support 36 now opens open to the left, in the manner described above. Repulsive force exerted by magnet 34 causes central magnet 22 again to reverse its direction, returning toward the left end of the path. This sort of oscillatory motion continues for some time, thus driving shaft 26 and causing generator 30 to output electrical power continuously.

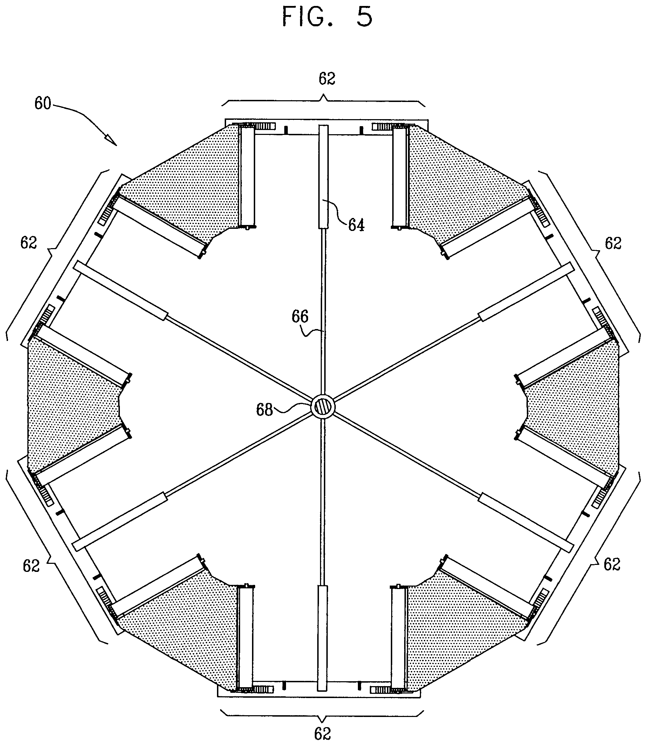

Fig. 5 is a schematic, frontal view of a system 60 for magnetic power generation, in accordance with another embodiment of the present invention. The system comprises multiple machines 62, which operate on principles similar to those of machine 20, as described above. Each machine 62 comprises a central magnet 64, which is connected by a linkage 66, together with the central magnets of the other machines, to drive a shaft 68. This collective drive arrangement intensifies the power that can be supplied to the shaft. Other drive configurations, using a single machine or multiple, linked machines, will be apparent to those skilled in the art and are considered to be within the scope of the present invention.

It will be appreciated that the embodiments described above are cited by way of example, and that the present invention is not limited to what has been particularly shown and described hereinabove. Rather, the scope of the present invention includes both combinations and subcombinations of the various features described hereinabove, as well as variations and modifications thereof which would occur to persons skilled in the art upon reading the foregoing description and which are not disclosed in the prior art.

## Claims

1. A magnetically operated machine (20), comprising:
a central magnet (22), which is configured to traverse a path having first and second ends, said ends being bounded by stops (48), and is connected by a linkage to rotate a shaft (26) as the central magnet traverses the path;
first and second side magnets (32, 34), which are respectively disposed adjacent to the first and second ends of the path and are oriented to repel the central magnet, so that a magnetic force between the central magnet and the first and second side magnets causes the central magnet to oscillate between the first and second ends of the path, thereby rotating the shaft; and
first and second shutter assemblies (36), respectively disposed between the first and second side magnets and the first and second ends of the path, the first and second shutter assemblies being operative to move toward the central magnet as the central magnet approaches the shutter assembly, and to move back, as the central magnet moves away toward the opposite end of its path, each of said first and second shutter assemblies comprising:
at least one ferromagnetic shutter (40), having open and closed positions; and
a mechanism, which is arranged to open the at least one ferromagnetic shutter as the central magnet approaches the shutter assembly, and to close it, as the central magnet moves away toward the opposite end of its path, thereby modulating the magnetic force synchronously with oscillation of the central magnet.

2. The machine according to claim 1, wherein the shaft (26) is coupled to
generate electrical power as it rotates.

3. The machine according to claim 1 or claim 2, wherein the mechanism (42) is arranged to open the at least one ferromagnetic shutter (40) as a result of movement of a shutter assembly (36) toward the central magnet (22).

4. The machine according to claim 3, wherein the mechanism (42) comprises at least one gear (46), which is coupled to turn the at least one shutter (40), and is configured so that the movement of the shutter assembly (36) toward the central magnet (22) causes the at least one gear (46) to turn.

5. A magnetic system comprising a plurality of machines according to any of claims 1-4, wherein the machines are collectively linked to rotate the shaft (26).

6. A method using magnetic force, said method comprising:
coupling a central magnet (22) to rotate a shaft (26) as the central magnet (22) traverses a path having first and second ends, said ends being bounded by stops (48);
positioning first and second side magnets (32,34) adjacent to the first and second ends of the path and orienting the first and second side magnets (32,34) to repel the central magnet (22), so that a magnetic force between the central magnet (22) and the first and second side magnets (32,34) causes the central magnet (22) to oscillate between the first and second ends of the path, thereby rotating the shaft (26); and
disposing first and second shutter assemblies (36) respectively between the first and second side magnets (32,34) and the first and second ends of the path, the first and second shutter assemblies (36) being operative to move toward the central magnet (22), as the central magnet (22) approaches the shutter assembly (36), and to move back, as the central magnet moves away toward the opposite end of its path, each of said first and second shutter assemblies (36) comprising:
at least one ferromagnetic shutter (40), having open and closed positions; and
a mechanism (42), which is arranged to open the at least one ferromagnetic shutter (40) as the central magnet (22) approaches the shutter assembly (36), and to close it, as the central magnet moves away toward the opposite end of its path,_thereby modulating the magnetic force synchronously with oscillation of the central magnet (22).

7. The method according to claim 6, and comprising coupling the shaft (26) to generate electrical power as it rotates.

8. The method according to claim 6 or claim 7, wherein the mechanism (42) is arranged to open the at least one ferromagnetic shutter (40) as a result of movement of a shutter assembly (36) toward the central magnet (22).

9. The method according to claim 8, wherein the mechanism (42) comprises at least one gear (46), which is coupled to turn the at least one shutter (40), and is configured so that the movement of the shutter assembly (36) toward the central magnet (22) causes the at least one gear (46) to turn.

## Patentansprüche

1. Magnetbetriebene Maschine (20), umfassend:
einen mittleren Magneten (22), der so ausgelegt ist, dass er einen Pfad mit ersten und zweiten Enden durchläuft, wobei die Enden durch Anschläge (48) begrenzt sind, und durch ein Gestänge zum Drehen einer Welle (26), wenn der mittlere Magnet den Pfad durchläuft, verbunden ist;
erste und zweite seitliche Magneten (32, 34), die jeweils benachbart zu den ersten und zweiten Enden des Pfades angeordnet und so orientiert sind, dass sie den mittleren Magneten abstoßen, so dass eine Magnetkraft zwischen dem mittleren Magneten und den ersten und zweiten seitlichen Magneten den mittleren Magneten zum Schwingen zwischen den ersten und zweiten Enden des Pfades und dadurch Drehen der Welle veranlasst; und
erste und zweite Blendenanordnungen (36), die jeweils zwischen den ersten und zweiten seitlichen Magneten und den ersten und zweiten Enden des Pfades angeordnet sind, wobei die ersten und zweiten Blendenanordnungen so ausgelegt sind, dass sie sich zum mittleren Magneten hinbewegen, wenn sich der mittlere Magnet der Blendenanordnung nähert, und zurückbewegen, wenn sich der mittlere Magnet zum gegenüberliegenden Ende seines Pfades wegbewegt, wobei jede der ersten und zweiten Blendenanordnungen umfasst:
mindestens eine ferromagnetische Blende (40) mit offenen und geschlossenen Stellungen; und
einen Mechanismus, der so ausgelegt ist, dass er die mindestens eine ferromagnetische Blende öffnet, wenn sich der mittlere Magnet der Blendenanordnung nähert, und sie schließt, wenn sich der mittlere Magnet zum gegenüberliegenden Ende seines Pfades wegbewegt, um dadurch die Magnetkraft synchron mit der Schwingung des mittleren Magneten zu modulieren.

2. Maschine nach Anspruch 1, wobei die Welle gekoppelt ist, um elektrische Energie zu erzeugen, wenn sie sich dreht.

3. Maschine nach Anspruch 1 oder 2, wobei der Mechanismus (42) so ausgelegt ist, dass er die mindestens eine ferromagnetische Blende (40) infolge von Bewegung einer Blendenanordnung (36) zum mittleren Magneten (22) hin öffnet.

4. Maschine nach Anspruch 3, wobei der Mechanismus (42) mindestens ein Zahnrad (42) umfasst, das wiederum mit der mindestens einen Blende (40) gekoppelt ist, und so ausgelegt ist, dass die Bewegung der Blendenanordnung (36) zum mittleren Magneten (22) hin das mindestens eine Zahnrad (46) zum Drehen veranlasst.

5. Magnetisches System, umfassend eine Mehrzahl von Maschinen nach einem der Ansprüche 1 bis 4, wobei die Maschinen zum Drehen der Welle (26) miteinander verbunden sind.

6. Verfahren, das Magnetkraft einsetzt, wobei das Verfahren umfasst:
Koppeln eines mittleren Magneten (22) zum Drehen einer Welle (26), wenn der mittlere Magnet (22) einen Pfad mit ersten und zweiten Enden durchläuft, wobei die Enden durch Anschläge (48) begrenzt sind;
Positionieren von ersten und zweiten seitlichen Magneten (32, 34) benachbart zu den ersten und zweiten Enden des Pfades und Orientieren der ersten und zweiten seitlichen Magneten (32, 34), um den mittleren Magneten (22) abzustoßen, so dass eine Magnetkraft zwischen dem mittleren Magneten (22) und den ersten und zweiten seitlichen Magneten (32, 34) den mittleren Magneten (22) zum Schwingen zwischen den ersten und zweiten Enden des Pfades und dadurch Drehen der Welle (26) veranlasst; und
Anordnen erster und zweiter Blendenanordnungen (36) jeweils zwischen den ersten und zweiten seitlichen Magneten (32, 34) und den ersten und zweiten Enden des Pfades, wobei die ersten und zweiten Blendenanordnungen (36) so ausgelegt sind, dass sie sich zum mittleren Magneten (22) hinbewegen, wenn sich der mittlere Magnet (22) der Blendenanordnung (36) nähert, und zurückbewegen, wenn sich der mittlere Magnet zum gegenüberliegenden Ende seines Pfades wegbewegt, wobei jede der ersten und zweiten Blendenanordnungen (36) umfasst:
mindestens eine ferromagnetische Blende (40) mit offenen und geschlossenen Stellungen; und
einen Mechanismus (42), der so ausgelegt ist, dass er die mindestens eine ferromagnetische Blende (40) öffnet, wenn sich der mittlere Magnet (22) der Blendenanordnung (36) nähert, und sie schließt, wenn sich der mittlere Magnet zum gegenüberliegenden Ende seines Pfades wegbewegt, um dadurch die Magnetkraft synchron mit der Schwingung des mittleren Magneten (22) zu modulieren.

7. Verfahren nach Anspruch 6 und umfassend ein Koppeln der Welle (26), um elektrische Energie zu erzeugen, wenn sie sich dreht.

8. Verfahren nach Anspruch 6 oder 7, wobei der Mechanismus (42) so ausgelegt ist, dass er die mindestens eine ferromagnetische Blende (40) infolge von Bewegung einer Blendenanordnung (36) zum mittleren Magneten (22) hin öffnet.

9. Verfahren nach Anspruch 8, wobei der Mechanismus (42) mindestens ein Zahnrad (42) umfasst, das wiederum mit der mindestens einen Blende (40) gekoppelt ist, und so ausgelegt ist, dass die Bewegung der Blendenanordnung (36) zum mittleren Magneten (22) hin das mindestens eine Zahnrad (46) zum Drehen veranlasst.

## Revendications

1. Machine actionnée magnétiquement (20) comprenant :
un aimant central (22), qui est conçu pour parcourir une trajectoire ayant une première et une deuxième extrémités, lesdites extrémités étant définies par des butées (48) et qui est connecté par une liaison pour faire tourner un arbre (26) lorsque l'aimant central parcourt la trajectoire ;
un premier et un deuxième aimants latéraux (32, 34) qui sont disposés respectivement de manière adjacente à la première et la deuxième extrémité de la trajectoire et sont orientés de façon à repousser l'aimant central de façon à ce qu'une force magnétique entre l'aimant central et le premier et le deuxième aimants latéraux provoque l'oscillation de l'aimant central entre la première et la deuxième extrémité de la trajectoire, provoquant ainsi la rotation de l'arbre ; et
un premier et un deuxième ensembles obturateurs (26), disposées respectivement entre le premier et le deuxième aimants latéraux et les première et deuxième extrémités de la trajectoire, les premier et deuxième ensembles obturateurs étant conçus pour se déplacer en direction de l'aimant central lorsque l'aimant central s'approche de l'ensemble navette et revenir lorsque l'aimant central s'éloigne en direction de l'extrémité opposée de sa trajectoire, chacun desdits premier et deuxième ensembles obturateurs comprenant :
au moins un obturateur ferromagnétique (40) ayant des positions ouverte et fermée ; et
un mécanisme qui est conçu pour ouvrir l'au moins un obturateur ferromagnétique lorsque l'aimant central s'approche de l'ensemble obturateur et pour le ferme lorsque l'aimant central s'éloigne en direction de l'extrémité opposée de sa trajectoire, modulant ainsi la force magnétique de manière synchrone avec l'oscillation de l'aimant central.

2. Machine selon la revendication 1, dans laquelle l'arbre (26) est couplé pour générer une puissance électrique lorsqu'il tourne.

3. Machine selon la revendication 1 ou 2, dans laquelle le mécanisme (42) est conçu pour ouvrir l'au moins un obturateur ferromagnétique (40) suite à un mouvement d'un ensemble obturateur (36) en direction de l'aimant central (22).

4. Machine selon la revendication 3, dans laquelle le mécanisme (42) comprend au moins un engrenage (46) qui est couplé pour faire tourner l'au moins un obturateur (40) et est conçu de façon à ce que le mouvement de l'ensemble obturateur (36) en direction de l'aimant central (22) provoque la rotation de l'au moins un engrenage (46).

5. Système magnétique comprenant une pluralité de machines selon l'une des revendications 1 à 4, dans lequel les machines sont collectivement reliées pour provoquer la rotation de l'arbre (26).

6. Procédé utilisant une force magnétique, ledit procédé comprenant :
le couplage d'un aimant central (22) pour provoquer la rotation d'un arbre (26) lorsque l'aimant central (22) parcourt une trajectoire ayant une première et une deuxième extrémités, lesdites extrémités étant définies par des butées (48) ;
le positionnement d'un premier et d'un deuxième aimants latéraux (32, 34) de manière adjacente aux première et deuxième extrémités de la trajectoire et l'orientation des premier et deuxième aimants latéraux (32, 34) de façon à repousser l'aimant central (22), de façon à ce qu'une force magnétique entre l'aimant central (22) et les premier et deuxième aimants latéraux (32, 34) provoque l'oscillation de l'aimant central (22) entre les première et deuxième extrémités de la trajectoire, provoquant ainsi la rotation de l'arbre (26) ; et
la disposition des premier et deuxième ensembles obturateurs (36) respectivement entre les premier et deuxième aimants latéraux (32, 34) et les première et deuxième extrémités de la trajectoire, les premier et deuxième ensembles obturateurs (36) étant conçus pour se déplacer en direction de l'aimant central (22) lorsque l'aimant central (22) s'approche de l'ensemble obturateur (36) et pour revenir lorsque l'aimant central s'éloigne en direction de l'extrémité opposée de sa trajectoire, chacun desdits premier et deuxième ensembles obturateurs (36) comprenant :
au moins un obturateur ferromagnétique (40) ayant des positions ouverte et fermée ; et
un mécanisme (42) qui est conçu pour ouvrir l'au moins un obturateur ferromagnétique (40) lorsque l'aimant central (22) s'approche de l'ensemble obturateur (36) et pour le fermer lorsque l'aimant central s'éloigne en direction de l'extrémité opposée de sa trajectoire, modulant ainsi la force magnétique de manière synchrone avec l'oscillation de l'aimant central (22).

7. Procédé selon la revendication 6 et comprenant le couplage de l'arbre (26) pour générer une puissance électrique lorsqu'il tourne.

8. Procédé selon la revendication 6 ou la revendication 7, dans lequel le mécanisme (42) est conçu pour ouvrir l'au moins un obturateur ferromagnétique (40) suite à un mouvement d'un ensemble obturateur (36) en direction de l'aimant central (22).

9. Procédé selon la revendication 8, dans lequel le mécanisme (42) comprend au moins un engrenage (46), qui est couplé de façon à provoquer la rotation d'au moins un obturateur (40) et est conçu de façon à ce que le mouvement de l'ensemble obturateur (36) en direction de l'aimant central (22) provoque la rotation de l'au moins un engrenage (46).
